# FASCICULE DE BREVET EUROPEEN

(11) **EP 2 785 576 B1**
(45) Date de publication et mention de la délivrance du brevet: **03.02.2016**
(21) Numéro de dépôt: 12794956.8
(22) Date de dépôt: 30.11.2012
(51) Int. Cl.: B62D 25/08, B62D 25/14

(54) **VÉHICULE AUTOMOBILE COMPRENANT UNE TRAVERSE SUPÉRIEURE DE TABLIER**
KRAFTFAHRZEUG MIT EINEM OBEREN BRANDSCHOTTQUERTRÄGER
MOTOR VEHICLE INCLUDING AN UPPER FIREWALL CROSSBEAM

(30) Priorité: 02.12.2011 FR 1161094
(43) Date de publication de la demande: 08.10.2014
(73) Titulaire: Renault S.A.S., 92100 Boulogne-Billancourt (FR)
(72) Inventeur: DELORD, Christian, F-93320 Pavillons-sous-Bois (FR)
(86) Numéro de dépôt international: PCT/EP2012/074016
(87) Numéro de publication internationale: WO 2013/079627

(56) Documents cités:
- DE-C1- 4 422 498
- FR-A1- 2 900 122
- GB-A- 2 206 085
- JP-A- 2007 030 627

## Description

La présente invention concerne le domaine des véhicules automobiles et notamment la partie frontale des véhicules automobiles.

On entend par « partie frontale », la structure avant comprenant une cloison transversale, appelée « tablier », séparant l'habitable d'un véhicule automobile du compartiment moteur, une traverse de planche de bord située en-dessous du pare-brise, une planche de bord, une traverse inférieure de baie s'étendant sensiblement parallèlement à la traverse de planche de bord, afin notamment, de renforcer la traverse de planche de bord, ainsi qu'une cloison de chauffage reliée à la cloison transversale.

Afin de renforcer la cloison transversale, il est connu de prévoir une traverse supérieure de tablier, permettant de protéger le système de freinage, ou servo-frein, en cas de choc frontal. En effet, le servo-frein est généralement situé en partie supérieure de la cloison transversale. Par ailleurs, il est connu de prévoir des systèmes de fixation des manetons d'essuie-glace.

Dans certains véhicules automobiles, la traverse de tablier est constituée d'un ensemble de pièces assemblées par soudage.

Le document FR2921886 qui décrit une traverse de milieu de tablier propose une unique traverse de tablier afin de réduire le nombre de pièce ainsi que les étapes de soudage.

Toutefois, une telle traverse ne permet pas de protéger le servo-frein, ni d'intégrer des moyens de fixation des manetons d'essuie-glace.

La présente invention a donc pour but de remédier à ces inconvénients.

Un objectif de l'invention est donc de fournir un véhicule automobile comprenant une traverse supérieure de tablier permettant à la fois d'assurer la protection du système de freinage, l'évacuation de l'eau sous la traverse de baie, ainsi que la fixation des manetons d'essuie-glace sans engendrer d'encombrement transversal ou de surpoids, tout en étant simple à mettre en oeuvre et peu coûteuse.

Selon un mode de réalisation, l'invention a pour objet un véhicule automobile comprenant une caisse de véhicule automobile délimitée par deux côtés de caisse et un plancher de véhicule, une paroi fixée latéralement aux côtés de caisse et transversalement au plancher du véhicule, et destinée à séparer l'habitacle du véhicule d'un compartiment moteur, et une traverse supérieure de tablier présentant une section transversale s'ouvrant vers l'habitacle du véhicule et fermée par la paroi. Le document GB 2 206 085 A décrit un tel véhicule automobile.

La travers supérieure de tablier présente une forme en oméga comprenant une première portion destinée à être fixée sur la paroi et une deuxième portion destinée à être fixée sur la paroi. Les première et deuxième portions sont, par exemple, reliées par des portions embouties.

La traverse supérieure comprend des orifices aptes à coopérer avec des moyens de fixation de manetons d'essuie-glace.

Ainsi, la forme spécifique de la traverse supérieure de tablier, représentant schématiquement une forme en oméga, permet de rigidifier la partie supérieure de la paroi en cas de choc frontal du véhicule automobile avec un élément extérieur, et notamment permet de retenir un élément tel qu'un système de freinage, ou servo-frein, généralement situé en partie supérieure de la paroi, en cas de choc frontal entre le véhicule automobile et un élément extérieur et ainsi de limiter son intrusion dans l'habitacle du véhicule. Par ailleurs, les essuie-glaces sont directement fixés sur la traverse supérieure de tablier sans ajout de pièces supplémentaires.

Avantageusement, la traverse supérieure de tablier est en concordance de forme avec la paroi.

Par exemple, la première portion s'étend vers le compartiment moteur du véhicule par une première portion emboutie. La première portion peut être, à titre non limitatif, inclinée par rapport à un axe longitudinal du véhicule.

Par exemple, la première portion s'étend vers le compartiment moteur du véhicule par une première portion emboutie, inclinée par rapport à un axe longitudinal du véhicule. Ainsi, la surface inclinée de la première portion emboutie permet à l'eau de s'évacuer naturellement vers l'avant du véhicule automobile.

Avantageusement, les première et deuxième portions de la traverse supérieure sont fixées de façon étanche respectivement sur la paroi par des points de soudure. En effet, une telle traverse ne nécessite que deux lignes de points de soudures et deux lignes de moyens d'étanchéité, tel que par exemple du mastic, ce qui permet de réduire le coût et la durée d'assemblage.

Dans un mode de réalisation, la paroi comprend une cloison transversale destinée à être fixée au plancher du véhicule et une cloison de chauffage destinée à être fixée à la cloison transversale.

Avantageusement, la traverse supérieure de tablier est destinée à être fixée par une première portion à la cloison de chauffage et par une deuxième portion à la cloison transversale. Ainsi, la forme spécifique de la traverse supérieure de tablier permet de rigidifier plus particulièrement la partie supérieure de la paroi, ou cloison transversale, appelée « tablier », en cas de choc frontal du véhicule automobile avec un élément extérieur.

La section transversale de la traverse supérieure de tablier s'ouvrant vers l'habitacle du véhicule est, par exemple, destinée à être fermée par la cloison de chauffage ou par la cloison transversale.

La traverse supérieure peut être réalisée en tôle métallique emboutie, ou par tout autre moyen de réalisation, tel que par exemple du profilage.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement une partie frontale d'un véhicule automobile selon l'invention ;
- la figure 2 illustre un détail de la traverse supérieure de tablier selon la figure 1 ;
- la figure 3 illustre une section transversale de la figure 2 ;
- les figures 4 et 5 illustrent des variantes de la figure 3.

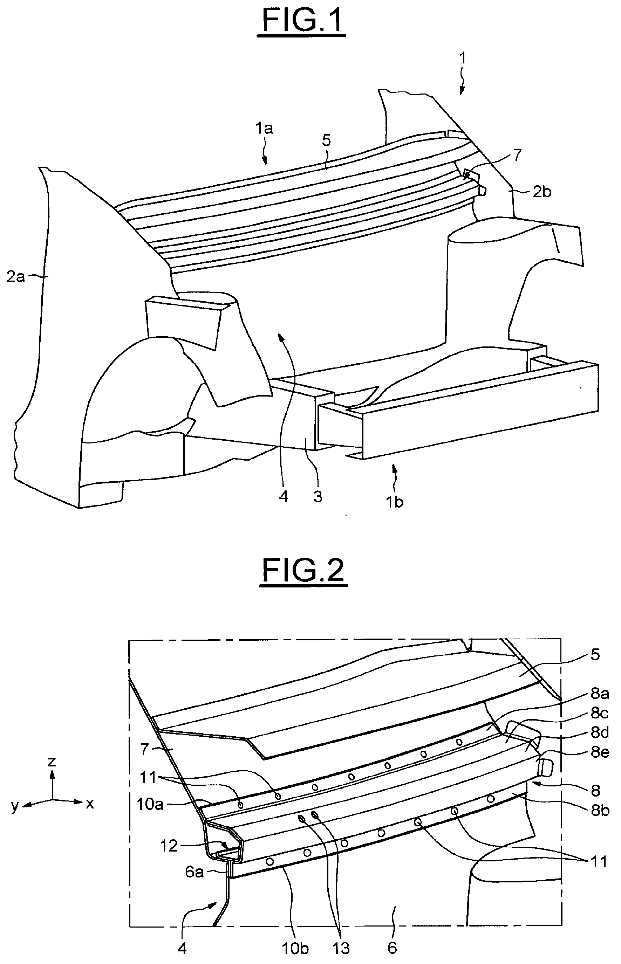

Dans la suite de la description, les termes « longitudinal », « transversal », « vertical », « avant », « arrière », « gauche » et « droite », s'entendent par rapport au repère orthogonal usuel des véhicules automobiles, représenté sur la figure 2, et comprenant :
- un axe longitudinal X, horizontal et dirigé de l'arrière vers l'avant du véhicule ;
- un axe transversal Y, horizontal, perpendiculaire à l'axe X et dirigé de gauche à droite du véhicule se déplaçant vers l'avant ;
- un axe Z, orthogonal aux axes X et Y et vertical.

Telle qu'illustrée sur la figure 1, une partie frontale d'un véhicule automobile, référencée 1 dans son ensemble, comprend une caisse délimitée par deux côtés de caisse 2a, 2b, et un plancher de véhicule dont une partie 3 est représentée sur la figure 1. La caisse délimite un intérieur 1a et un extérieur du véhicule 1. L'intérieur 1a du véhicule 1 représente l'habitacle du véhicule 1.

La structure avant du véhicule automobile 1 comprend une paroi 4 séparant l'habitable 1a du véhicule automobile 1 d'un compartiment moteur 1b, une traverse de planche de bord (non représentée) située en-dessous du pare-brise (non représenté), et une traverse inférieure de baie 5 s'étendant sensiblement parallèlement à la traverse de planche de bord.

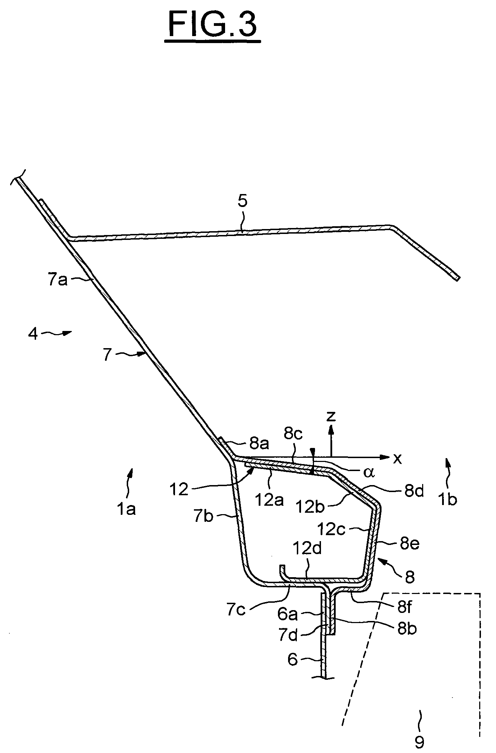

Telle qu'illustrée sur les figures 2 et 3, la paroi 4 comprend une cloison transversale 6, appelée « tablier », disposée en aval du compartiment moteur 1b et une cloison de chauffage 7 reliée à la cloison transversale 6. La cloison transversale 6 est disposée dans le véhicule automobile 1 transversalement suivant l'axe Y, entre les côtés de caisse 2a, 2b et horizontalement entre le plancher 3 et la cloison de chauffage 7. Dans le mode de réalisation illustré sur les figures 2 et 3, la cloison de chauffage 7 comprend une première portion 7a, inclinée par rapport à l'axe vertical Z, destinée à être fixée à la traverse inférieure de baie 5 et s'étendant vers la cloison transversale 6 par une deuxième portion 7b, inclinée par rapport à la première portion 7a. La deuxième portion 7b s'étend vers le compartiment moteur 1b du véhicule 1 par une portion substantiellement horizontale 7c, puis par une quatrième portion substantiellement verticale 7d de fixation à la cloison transversale 6. De manière alternative, les première et deuxième portions 7a, 7b peuvent être substantiellement verticales et la portion substantiellement horizontale 7c peut être inclinée par rapport à l'axe longitudinal X.

Pour renforcer la cloison transversale 6 dans une partie supérieure 6a à proximité de la cloison de chauffage 7, le véhicule automobile 1 comprend une traverse supérieure de tablier 8. La traverse supérieure de tablier 8 permet de rigidifier la partie supérieure 6a de la cloison transversale 6 et d'éviter l'intrusion du système de freinage 9, ou servo-frein, en cas de choc frontal entre le véhicule automobile 1 et un élément extérieur (non représenté). En effet, le servo-frein 9, illustré en pointillés sur la figure 3 est généralement situé en partie supérieure 6a de la cloison transversale 6.

La traverse supérieure de tablier 8, réalisée, par exemple, en tôle métallique emboutie, est disposée dans le véhicule automobile 1 transversalement suivant l'axe Y, entre les côtés de caisse 2a, 2b.

La traverse supérieure de tablier 8 comprend une première portion 8a destinée à être fixée sur première portion 7a de la cloison de chauffage 7. Dans le mode de réalisation illustré, la première portion 8a est inclinée par rapport à l'axe vertical Z. La traverse supérieure de tablier 8 comprend une deuxième portion 8b substantiellement verticale destinée à être fixée sur la cloison transversale 6. La première portion 8a de la traverse supérieure 8 est en concordance de forme avec la première portion 7a de la cloison de chauffage 7.

Les première et deuxième portions 8a, 8b sont reliées par des portions embouties 8c, 8d, 8e, 8f. La première portion 8a s'étend vers l'avant du véhicule automobile 1 par une première portion emboutie 8c, inclinée par rapport à l'axe longitudinal X, d'un angle α, par exemple de 8°. La première portion emboutie 8c s'étend vers l'avant du véhicule, notamment vers le compartiment moteur 1b, par une deuxième portion emboutie 8d, par exemple, inclinée par rapport à la première portion emboutie 8c et s'étendant à son tour par une troisième portion emboutie substantiellement verticale 8e, puis par une quatrième portion emboutie substantiellement horizontale 8f.

Dans l'exemple illustré sur les figures 2 et 3, la traverse supérieure de tablier 8 présente une section transversale s'ouvrant vers l'habitacle 1a du véhicule 1 et fermée par la cloison de chauffage 7.

Les première et deuxième portions 8a, 8b de la traverse supérieure de tablier 8 sont fixées de façon étanche par des moyens d'étanchéité 10a, 10b respectivement sur la cloison de chauffage 7 et sur la cloison transversale 6 et par des points de soudure 11, tel qu'illustré à la figure 2.

A titre d'alternative, un renfort de traverse 12 est disposé entre la traverse supérieure de tablier 8 et la cloison de chauffage 7. Le renfort de traverse 12 comprend des portions embouties 12a, 12b, 12c, 12d en concordance de forme, respectivement avec les portions embouties 8c, 8d, 8e et 8f de la traverse supérieure de tablier 8. La quatrième portion emboutie 12d du renfort de traverse 12 est en contact avec la portion substantiellement horizontale 7c de la cloison de chauffage 7.

Le renfort de traverse 12, soudé à la traverse supérieure de tablier 8, présente également une section transversale s'ouvrant vers l'habitacle 1a du véhicule 1 et fermée par la cloison de chauffage 7.

Telle qu'illustrée sur la figure 2, la traverse supérieure de tablier 8 comprend des orifices 13 aptes à coopérer avec des moyens de fixation des manetons d'essuie-glace (non représentés).

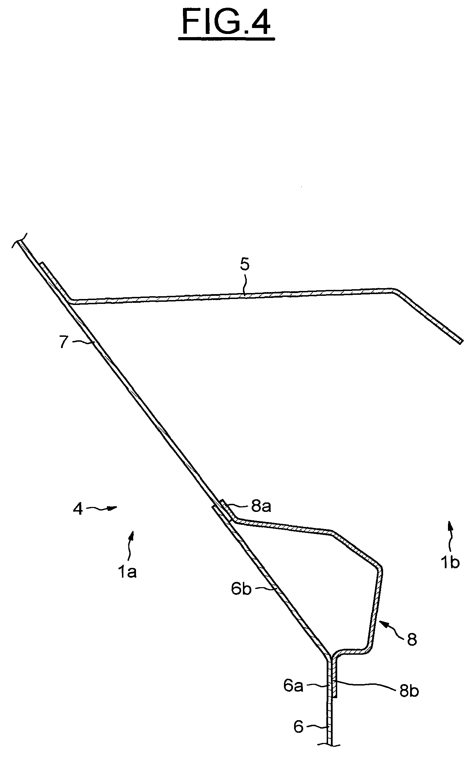

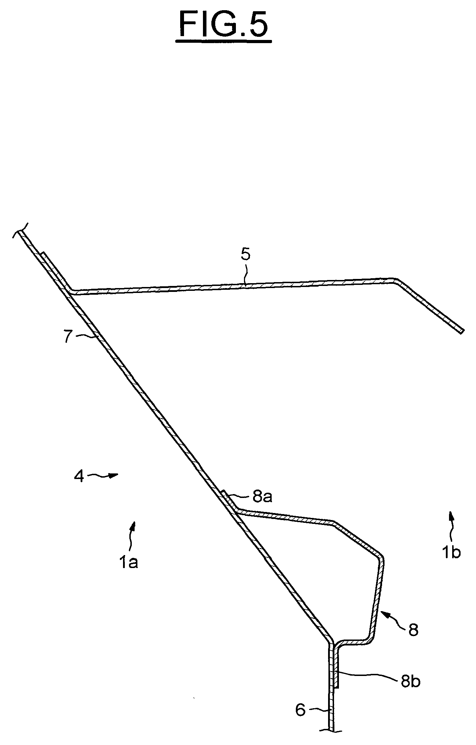

Les modes de réalisation des figures 4 et 5, dans lesquels les mêmes éléments ont les mêmes références, diffèrent uniquement du mode de réalisation illustré aux figures 2 et 3 par la structure de la paroi 4 de séparation entre l'habitacle 1a et le compartiment moteur 1b du véhicule 1.

Telle qu'illustrée sur la figure 4, la partie supérieure 6a de la cloison transversale 6 se prolonge vers la cloison de chauffage 7 par une deuxième partie 6b substantiellement inclinée par rapport à la partie supérieure 6a.

Dans ce mode de réalisation, la section transversale de la traverse supérieure de tablier 8, s'ouvrant vers l'habitacle 1a du véhicule 1, est fermée par la cloison transversale 6, et notamment par la deuxième partie 6b.

Un renfort (non représenté sur cette figure) pourrait être également soudé à la traverse supérieure de tablier 8 de manière identique au mode de réalisation de la figure 3.

Telle qu'illustrée sur la figure 5, la paroi 4 de séparation est formée par une unique tôle métallique formant la cloison de chauffage 7 et la cloison transversale 6.

Dans ce mode de réalisation, la section transversale de la traverse supérieure de tablier 8, s'ouvrant vers l'habitacle 1a du véhicule 1, est fermée par la paroi 4 de séparation.

Un renfort (non représenté sur cette figure) pourrait être également soudé à la traverse supérieure de tablier 8 de manière identique au mode de réalisation de la figure 3.

Grâce à l'invention qui vient d'être décrite, le véhicule automobile comprend une traverse supérieure de tablier permettant à la fois d'assurer la protection du système de freinage, l'évacuation de l'eau sous la traverse de baie, ainsi que la fixation des manetons d'essuie-glace, réduisant ainsi le nombre de pièce à assembler.

De plus, une telle traverse engendre peu d'encombrement transversal ou de surpoids, et reste simple à mettre en oeuvre et peu coûteuse.

## Revendications

1. Véhicule automobile comprenant une caisse de véhicule automobile délimitée par deux côtés de caisse (2a, 2b) et un plancher de véhicule (3), une paroi (4) fixée latéralement aux côtés de caisse (2a, 2b) et transversalement au plancher du véhicule (3), et destinée à séparer l'habitacle (1a) du véhicule (1) d'un compartiment moteur (1b), et une traverse supérieure de tablier (8) présentant une section transversale s'ouvrant vers l'habitacle (1a) du véhicule (1) et fermée par la paroi (4), **caractérisé en ce que** la traverse supérieure de tablier (8) présente une forme en oméga comprenant une première portion (8a) destinée à être fixée sur la paroi (4) et une deuxième portion (8b) destinée à être fixée sur la paroi (4), les première et deuxième portions (8a, 8b) étant reliées par des portions embouties (8c, 8d, 8e, 8f), la première portion (8a) s'étendant vers le compartiment moteur (1b) du véhicule (1) par une première portion emboutie (8c), inclinée par rapport à un axe longitudinal (X) du véhicule (1) **et en ce que** la traverse supérieure (8) comprend des orifices (13) aptes à coopérer avec des moyens de fixation de manetons d'essuie-glace.

2. Véhicule automobile selon la revendication 1, dans lequel la traverse supérieure de tablier (8) est en concordance de forme avec la paroi (4).

3. Véhicule automobile selon l'une des revendications 1 ou 2, dans lequel les première et deuxième portions (8a, 8b) de la traverse supérieure (8) sont fixées de façon étanche respectivement sur la paroi (4) par des points de soudure (11).

4. Véhicule automobile selon l'une quelconque des revendications précédentes, dans lequel la paroi (4) comprend une cloison transversale (6) destinée à être fixée au plancher (3) du véhicule et une cloison de chauffage (7) destinée à être fixée à la cloison transversale (6).

5. Véhicule automobile selon la revendication 4, dans lequel la traverse supérieure de tablier (8) est destinée à être fixée par une première portion (8a) à la cloison de chauffage (7) et par une deuxième portion (8b) à la cloison transversale (6).

6. Véhicule automobile selon l'une des revendications 4 ou 5, dans lequel la section transversale de la traverse supérieure de tablier (8) s'ouvrant vers l'habitacle (1a) du véhicule (1) est destinée à être fermée par la cloison de chauffage (7) ou par la cloison transversale (6).

7. Véhicule automobile selon l'une quelconque des revendications précédentes, dans lequel la traverse supérieure (8) est réalisée en tôle métallique emboutie.

## Patentansprüche

1. Kraftfahrzeug, umfassend eine Kraftfahrzeugkarosserie, die von zwei Karosserieseiten (2a, 2b) und einem Fahrzeugboden (3) begrenzt ist, eine Wand (4), die seitlich an den Karosserieseiten (2a, 2b) und quer zum Boden (3) des Fahrzeugs befestigt und dazu bestimmt ist, den Fahrgastraum (1a) des Fahrzeugs (1) von einem Motorabteil (1b) zu trennen, und einen oberen Brandschottquerträger (8), der einen Querschnitt aufweist, der sich zum Fahrgastraum (1a) des Fahrzeugs (1) hin öffnet und durch die Wand (4) geschlossen ist, **dadurch gekennzeichnet, dass** der obere Brandschottquerträger (8) eine Omega-Form aufweist, umfassend einen ersten Abschnitt (8a), der dazu bestimmt ist, an der Wand (4) befestigt zu werden, und einen zweiten Abschnitt (8b), der dazu bestimmt ist, an der Wand (4) befestigt zu werden, wobei der erste und der zweite Abschnitt (8a, 8b) durch tiefgezogene Abschnitte (8c, 8d, 8e, 8f) verbunden sind, wobei sich der erste Abschnitt (8a) zum Motorabteil (1b) des Fahrzeugs (1) hin mit einem ersten tiefgezogenen Abschnitt (8c) erstreckt, der in Bezug zu einer Längsachse (X) des Fahrzeugs (1) geneigt ist, und dass der obere Brandschottquerträger (8) Öffnungen (13) umfasst, die geeignet sind, mit Mitteln zur Befestigung von Scheibenwischerkurbelzapfen zusammenzuwirken.

2. Kraftfahrzeug nach Anspruch 1, bei dem der obere Brandschottquerträger (8) mit der Wand (4) eine Formübereinstimmung aufweist.

3. Kraftfahrzeug nach einem der Ansprüche 1 oder 2, bei dem der erste und der zweite Abschnitt (8a, 8b) des oberen Brandschottquerträgers (8) jeweils auf dichte Weise an der Wand (4) durch Schweißpunkte (11) befestigt sind.

4. Kraftfahrzeug nach einem der vorhergehenden Ansprüche, bei dem die Wand (4) eine quer verlaufende Trennwand (6), die dazu bestimmt ist, am Boden (3) des Fahrzeugs befestigt zu werden, und eine Heiztrennwand (7) umfasst, die dazu bestimmt ist, an der quer verlaufenden Trennwand (6) befestigt zu werden.

5. Kraftfahrzeug nach Anspruch 4, bei dem der obere Brandschottquerträger (8) dazu bestimmt ist, mit einem ersten Abschnitt (8a) an der Heiztrennwand (7) und mit einem zweiten Abschnitt (8b) an der quer verlaufenden Trennwand (6) befestigt zu werden.

6. Kraftfahrzeug nach einem der Ansprüche 4 oder 5, bei dem der Querschnitt des oberen Brandschottquerträgers (8), der sich zum Fahrgastraum (1a) des Fahrzeugs (1) hin öffnet, dazu bestimmt ist, durch die Heiztrennwand (7) oder durch die quer verlaufende Trennwand (6) geschlossen zu werden.

7. Kraftfahrzeug nach einem der vorhergehenden Ansprüche, bei dem der obere Brandschottquerträger (8) aus einem tiefgezogenen Metallblech hergestellt ist.

## Claims

1. Motor vehicle comprising a motor vehicle body delimited by two body sides (2a, 2b) and a vehicle floor (3), a wall (4) fixed laterally to the body sides (2a, 2b) and transversely to the vehicle floor (3) and designed to separate the passenger compartment (1a) of the vehicle (1) from an engine compartment (1b), and an upper firewall crossbeam (8) having a cross section which opens toward the passenger compartment (1a) of the vehicle (1) and which is closed by the wall (4), **characterized in that** the upper firewall crossbeam (8) is omega-shaped, comprising a first portion (8a) designed to be fixed to the wall (4) and a second portion (8b) designed to be fixed to the wall (4), the first and second portions (8a, 8b) being connected via swaged portions (8c, 8d, 8e, 8f), the first portion (8a) extending toward the engine compartment (1b) of the vehicle (1) via a first swaged portion (8c) which is inclined relative to a longitudinal axis (X) of the vehicle (1) and **in that** the upper crossbeam (8) comprises orifices (13) capable of cooperating with means for fixing the windshield wiper crankpins.

2. Motor vehicle according to Claim 1, in which the upper firewall crossbeam (8) is congruent with the wall (4).

3. Motor vehicle according to one of Claims 1 and 2, in which the first and second portions (8a, 8b) of the upper crossbeam (8) are respectively fixed in a sealed manner to the wall (4) by welding points (11).

4. Motor vehicle according to any one of the preceding claims, in which the wall (4) comprises a transverse bulkhead (6) designed to be fixed to the vehicle floor (3) and a heater bulkhead (7) designed to be fixed to the transverse bulkhead (6).

5. Motor vehicle according to Claim 4, in which the upper firewall crossbeam (8) is designed to be fixed via a first portion (8a) to the heater bulkhead (7) and via a second portion (8b) to the transverse bulkhead (6).

6. Motor vehicle according to one of Claims 4 and 5, in which the cross section of the upper firewall crossbeam (8) opening toward the passenger compartment (1a) of the vehicle (1) is designed to be closed by the heater bulkhead (7) or by the transverse bulkhead (6).

7. Motor vehicle according to any one of the preceding claims, in which the upper crossbeam (8) is produced from a swaged metal sheet.
